## Europäisches Patentamt

## European Patent Office

## Office européen des brevets

(19)

(11) Veröffentlichungsnummer: **0 297 085**
**A1**

(12) **EUROPÄISCHE PATENTANMELDUNG**

(21) Anmeldenummer: 88890159.2

(22) Anmeldetag: 20.06.88

(51) Int. Cl.⁴: **A 01 G 25/09**

(30) Priorität: 26.06.87 AT 1629/87

(43) Veröffentlichungstag der Anmeldung:
28.12.88 Patentblatt 88/52

(84) Benannte Vertragsstaaten:
DE ES FR GB GR IT

(71) Anmelder: **Röhren- und Pumpenwerk Rudolf Bauer
Aktiengesellschaft
A-8570 Voitsberg (AT)**

(72) Erfinder: **Ruprechter, Adam
Gaussgasse 7
A-8570 Voitsberg (AT)**

(74) Vertreter: **Piso, Eberhard, Dr.
Patentanwälte Dipl.-Ing. Herbert C.E. Krause Dr.
Eberhard Piso Gluckgasse 1 Fach 328
A-1010 Wien 1 (AT)**

(54) **Regnerstativ zur Aufnahme eines Regners.**

(57) Regnerstativ zur Aufnahme eines Regners, das eine den Regner (5) tragende, mit dem Regnerstativ gelenkig verbundene Pendelvorrichtung umfaßt; der Regner ist mit einer flexiblen Wasserzuführung (4) verbunden, und die Pendelvorrichtung ist mit einer nach unten weisenden, mit variierbaren Gewichten versehenen Ausgleichseinrichtung ausgestattet.

FIG.1

EP 0 297 085 A1

**Beschreibung**

Die Erfindung betrifft ein Regnerstativ zur Aufnahme eines Regners. Herkömmlicherweise ist der Regner mit dem Regnerstativ derart verbunden, daß es bei Betrieb in unebenem Gelände als auch bei erhöhtem Rohreinlauf zu einer Schrägstellung bzw. Neigung des Stativs und dadurch zu einer Funktionsbeeinträchtigung des Regners derart kommt, daß keine optimale Wasserverteilung mehr erreicht wird. Darüberhinaus wird durch die Schrägstellung des Regners auch dessen Lebensdauer negativ beeinträchtigt.

Die DE-OS 26 43 587 zeigt ein Regner-Schleppstativ mit einem starren Standrohr wobei an dessen senkrechtem Rohrteil beiderseits je ein Führungsrohr befestigt ist. Das Standrohr umfaßt einen senkrechten Teil, welcher in einen waagrechten Gleit- und Anschlußteil übergeht, an dem der Schlauch befestigt ist. Diese starre Konstruktion bedingt ebenfalls eine Schrägstellung des Stativs in unebenem Gelände, wodurch die erwähnte Funktionsbeeinträchtigung des Regners voll eintritt.

Aufgabe der Erfindung ist es, ein Regnerstativ zu schaffen, bei welchem eine Konstanthaltung der Regnerachse und damit die Beibehaltung des für den Regner konstruktiv optimierten Strahlerhebungswinkel gewährleistet ist. Die Erfindung löst die Aufgabe dadurch, daß das Regnerstativ eine den Regner tragende, mit dem Regnerstativ gelenkig verbundene Pendelvorrichtung umfaßt, daß der Regner mit einer flexiblen Wasserzuführung verbunden ist und daß die Pendelvorrichtung mit einer nach unten weisenden, mit variierbaren Gewichten versehenen Ausgleichseinrichtung versehen ist. Gemäß einer bevorzugten Ausführungsform der Erfindung ist die Pendelvorrichtung mit dem Regnerstativ über eine horizontale, senkrecht zur Längsachse des Regnerstativs stehende Schwenkachse verbunden. Die Erfindung besteht auch darin, daß die Pendelvorrichtung eine den Regner aufnehmende Trägerplatte und an deren Enden nach oben gerichtete Schenkel für die schwenkbare Aufhängung am Regnerstativ umfaßt. Weiters besteht die Erfindung darin, daß die Pendelvorrichtung senkrecht zur Auszugrichtung des Regnerstativs mit jedem ihrer Schenkel an je einer an einem Querträger des Regnerstativs angeordneten Stütze aufgehängt ist. Ein weiteres Merkmal der Erfindung ist es, daß die Tariereinrichtung mit der Trägerplatte fest verbunden ist. Ein anderes Merkmal der Erfindung ist es, daß die Pendelvorrichtung mit dem Regnerstativ über eine horizontale, zur Längsachse des Regnerstativs parallel stehende Schwenkachse verbunden ist. Ein anderes weiteres Merkmal der Erfindung ist es, daß am Querträger ein in Auszugrichtung U-förmiger Rahmen angeordnet ist und daß der Rahmen am Querträger um eine horizontale, auf den Querträger im rechten Winkel stehende Achse schwenkbar angeordnet ist. Ferner besteht die Erfindung darin, daß die Ausgleichseinrichtung vorzugsweise zwei, in der Verlängerung der Schenkel nach unten weisende Formrohre umfaßt. Die Erfindung löst die Aufgabe noch dadurch, daß die Ausgleichseinrichtung mehrere, seitlich nach oben gerichtete, stabförmige Halterungen zur Aufnahme von Gewichten umfaßt.

Ein abschließendes Merkmal der Erfindung ist es, daß die Tariereinrichtung vorzugsweise zwei, in der Verlängerung der Wippenschenkel nach unten weisende Formrohre umfaßt und daß die Tariereinrichtung mehrere, seitlich nach oben gerichtete stabförmige Halterungen zur Aufnahme von Gewichten umfaßt.

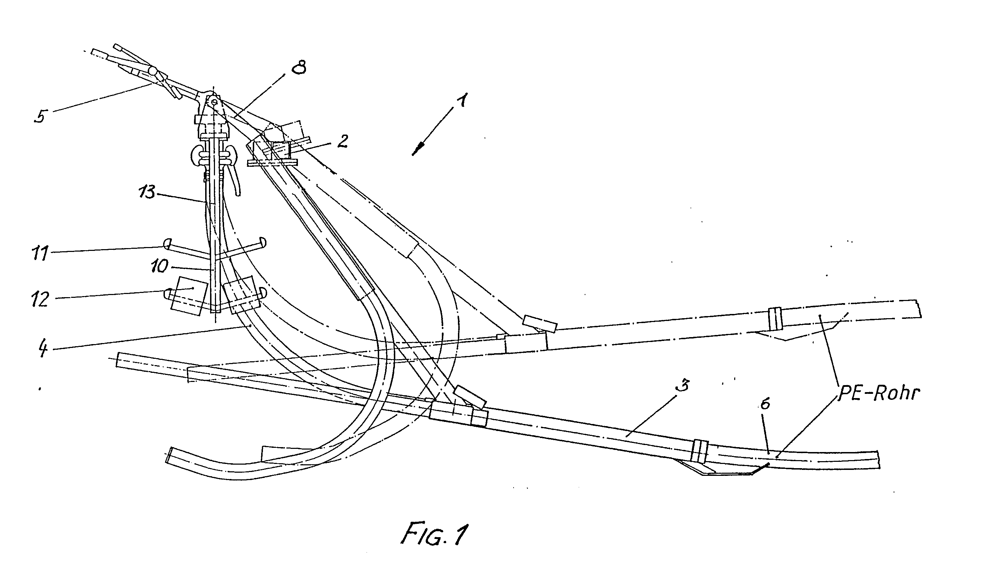

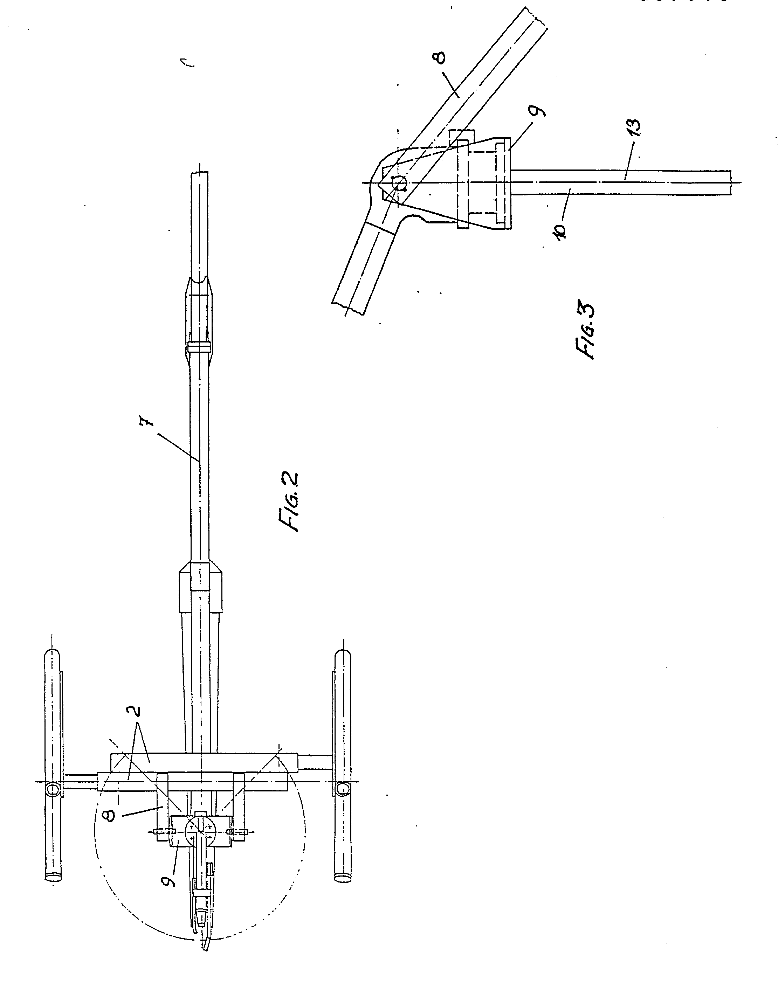

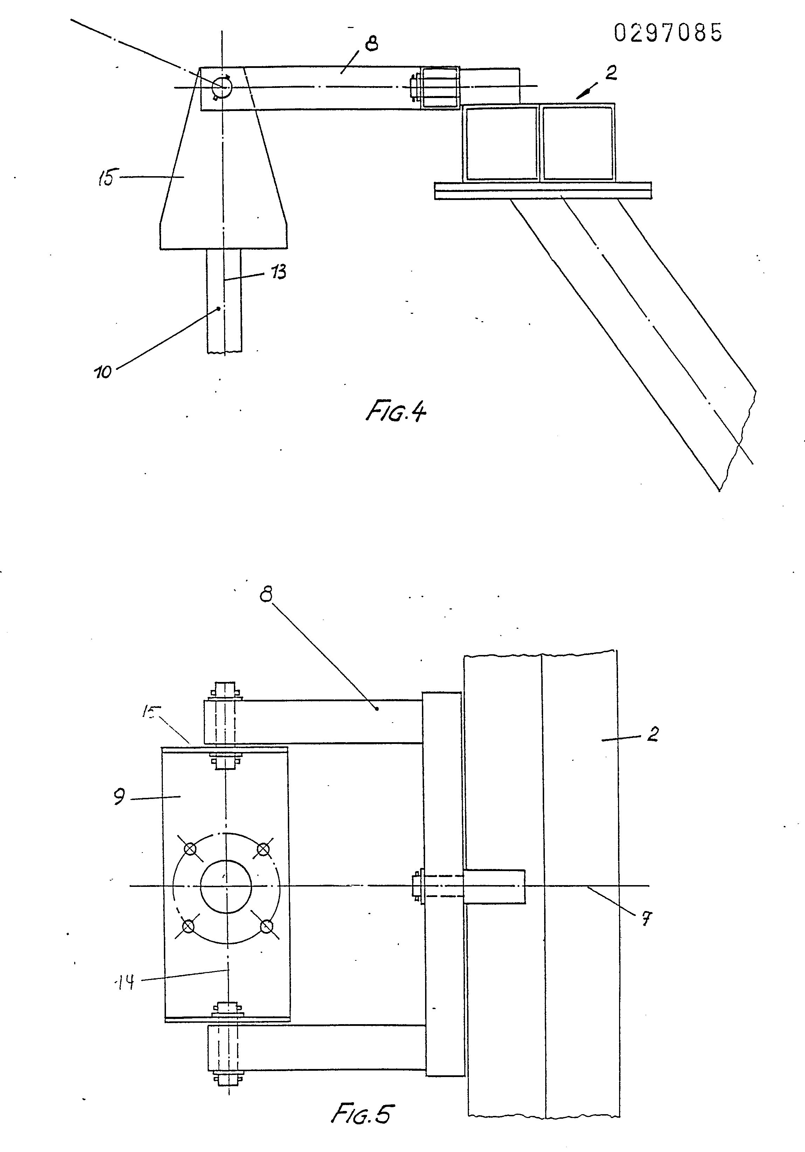

Die Erfindung wird im folgenden an Hand eines Ausführungsbeispieles unter Zuhilfenahme der an-geschlossénen Zeichnung näher beschrieben. Es zeigen Fig.1 das erfindungsgemäße Regnerstativ in einer Seitenansicht; Fig.2 eine Draufsicht auf das erfindungsgemäße Regnerstativ; Fig.3 eine Detailansicht der Fig.1; Fig.4 eine detaillierte Seitenansicht einer Ausbildungsvariante entsprechend Fig.1; und Fig.5 eine Draufsicht auf die Ausbildung entsprechend Fig.4. Das Regnerstativ 1 umfaßt zwei Kurvengestelle, welche mittels eines zweiteiligen Querträgers 2 verbunden sind. Der Querträger 2 kann beidseitig mittels eines versenkbaren Rohres verlängert bzw. verkürzt werden, wodurch die Spurbreite des Regnerstativs variabel gehalten ist. Das Regnerstativ 1 um faßt weiters ein über eine Schrägstütze gehaltenes Einlaufrohr 3, an welches einerseits ein flexibler Schlauch 4, der zum Regner 5 führt, und anderseits das PE-Rohr 6 angeschlossen wird. Der flexible Schlauch 4 kann an den Regner 5 mittels einer Kupplung trennbar oder auch fix angeordnet sein. Am Träger sind symmetrisch um die Längsmittelachse 7 des Stativs 1 zwei in Auszugrichtung des Stativs nach oben weisende Holme angeordnet, welche u.a. die beiden Schenkel eines U-förmigen Rahmens 8 bilden.

Diese beiden Holme sind mit dem Querträger fix verbunden. In deren Endbereichen ist eine von zwei senkrechten Schenkeln 15 getragene Trägerplatte 9 gelenkig angeordnet, wobei die Gelenkachsen 14 horizontal parallel zum Querträger 2 liegen und somit eine Pendelbewegung der Trägerplatte 9 in Längsrichtung des Regners ermöglichen. An der Oberseite der Trägerplatte 9 ist der Regner 5 angeordnet, welcher von der Unterseite her über eine Kupplung mit dem flexiblen Schlauch 4 verbunden ist. An der Unterseite der Trägerplatte ist eine Ausgleichseinrichtung angeordnet, welche zwei, in der Verlängerung der Schenkel nach unten weisende Formrohre 10 umfaßt, an welchen mehrere, seitlich nach oben gerichtete stabförmige Halterungen 11 zur Aufnahme von Gewichten 12 angeordnet sind (Fig.1). Die Ausgleichseinrichtung kann aber auch aus einem Gewichte tragenden Korb oder ähnlichen Einrichtungen bestehen. Durch diese Anordnung wird die Regnerachse 13 auch bei Betrieb des Stativs 1 auf welligem Boden immer lotrecht gehalten. Je nach den Geländegegebenheiten kann das Belastungsgewicht variiert werden. Eine derartige Schrägstellung des Stativs 1 ist in Fig.1 strichliert dargestellt. Soll auch ein Ausgleich bei seitlicher Schrägstellung des Stativs erfolgen, wird der Rahmen 8 gelenkig mit dem Träger 2 verbunden. Die Drehachse liegt dabei horizontal und senkrecht auf dem Träger 2 und vorzugsweise in der Längsachse des Stativs. Zusätzlich zur oben genannten Drehachse der Wippe verfügt das Stativ somit über eine weitere, zur oben genannten Drehachse normal stehende Drehachse, womit die Pendelvorrichtung kardanisch aufgebaut ist (Fig.4,5).

Die Anordnung der Drehpunkte der Pendelvorrichtung bzw. des Rahmens sind so gewählt, daß die vom Regner stammenden Re aktionskräfte infolge der Zusammenlegung der Drehachsen und Kraftwirkungslinien wirkungslos bleiben und somit keine Pendelbewegung hervorgerufen wird. Die Bogenumlenkkräfte der flexiblen Wasserzuführung 4 werden durch erhöhte Belastungsgewichte 12 ausgeglichen.

## Patentansprüche

1. Regnerstativ zur Aufnahme eines Regners, dadurch gekennzeichnet, daß das Regnerstativ (1) eine den Regner (5) tragende, mit dem Regnerstativ gelenkig verbundene Pendelvorrichtung (9, 15) umfaßt, daß der Regner mit einer flexiblen Wasserzuführung (4) verbunden ist und daß die Pendelvorrichtung mit einer nach unten weisenden, mit variierbaren Gewichten versehenen Ausgleichseinrichtung (10, 11, 12) versehen ist.

2. Regnerstativ nach Anspruch 1, dadurch gekennzeichnet, daß die Pendelvorrichtung (9, 15) mit dem Regnerstativ (1) über eine horizontale, senkrecht zur Längsachse des Regnerstativs stehende Schwenkachse (14) verbunden ist.

3. Regnerstativ nach Anspruch 1 oder 2, dadurch gekennzeichnet, daß die Pendelvorrichtung eine den Regner aufnehmende Trägerplatte (9) und an deren Enden nach oben gerichtete Schenkel (15) für die schwenkbare Aufhängung am Regnerstativ (1) umfaßt.

4. Regnerstativ nach den Ansprüchen 1 bis 3, dadurch gekennzeichnet, daß die Pendelvorrichtung senkrecht zur Auszugsrichtung des Regnerstativs mit jedem ihrer Schenkel (15) an je einer an einem Querträger (2) des Regnerstativs angeordneten Stütze aufgehängt ist.

5. Regnerstativ nach einem der Ansprüche 1 bis 4, dadurch gekennzeichnet, daß die Ausgleichseinrichtung (10, 11, 12) mit der Trägerplatte (9) fest verbunden ist.

6. Regnerstativ nach Anspruch 1 oder 2, dadurch gekennzeichnet, daß die Pendelvorrichtung (9, 15) mit dem Regnerstativ (1) über eine horizontale, zur Längsachse (7) des Regnerstativs parallel stehende Schwenkachse verbunden ist.

7. Regnerstativ nach einem der Ansprüche 1 bis 6, dadurch gekennzeichnet, daß am Querträger (2) ein in Auszugrichtung U-förmiger Rahmen (8) angeordnet ist und daß der Rahmen (8) am Querträger (2) um eine horizontale, auf den Querträger im rechten Winkel stehende Achse schwenkbar angeordnet ist.

8. Regnerstativ nach einem der Ansprüche 1 bis 7, da durch gekennzeichnet, daß die Ausgleichseinrichtung vorzugsweise zwei, in der Verlängerung der Schenkel nach unten weisende Formrohre (10) umfaßt.

9. Regnerstativ nach einem der Ansprüche 1 bis 8, dadurch gekennzeichnet, daß die Ausgleichseinrichtung mehrere, seitlich nach oben gerichtete, stabförmige Halterungen (11) zur Aufnahme der Gewichte (12) umfaßt.

Fig. 1

FIG. 2

FIG. 3

0297085

0297085

FIG.4

FIG.5

Europäisches
Patentamt

**EUROPÄISCHER RECHERCHENBERICHT**

Nummer der Anmeldung

EP 88 89 0159

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-C- 467 507 (KROJER) <br> * Insgesamt * <br> --- | 1 | A 01 G 25/09 |
| A | US-A-3 090 566 (SNYDER) <br> * Spalte 2, Zeile 1 - Spalte 3, Zeile 34; Figuren 1,2 * <br> ----- | 1,2 | |

RECHERCHIERTE
SACHGEBIETE (Int. Cl.4)

A 01 G
B 05 B

Der vorliegende Recherchenbericht wurde für alle Patentansprüche erstellt

| Recherchenort | Abschlußdatum der Recherche | Prüfer |
|---|---|---|
| DEN HAAG | 23-09-1988 | HERYGERS J.J. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument

    .............................................................
& : Mitglied der gleichen Patentfamilie, übereinstimmendes
    Dokument

EPO FORM 1503 03.82 (P0403)